(19) Europäisches Patentamt

European Patent Office

Office européen des brevets

(11) **EP 4 476 136 B1**

(12) **FASCICULE DE BREVET EUROPEEN**

(45) Date de publication et mention
de la délivrance du brevet:
**01.04.2026 Bulletin 2026/14**

(21) Numéro de dépôt: **23703068.9**

(22) Date de dépôt: **08.02.2023**

(51) Classification Internationale des Brevets (IPC):
**B64C 25/28** *(2006.01)* **B64D 45/00** *(2006.01)*
**F15B 13/042** *(2006.01)* **F15B 21/10** *(2006.01)*
**F15B 20/00** *(2006.01)*

(52) Classification Coopérative des Brevets (CPC):
**B64C 25/28; F15B 13/042; F15B 21/10;**
B64D 2045/0085; F15B 20/00; F15B 2211/50554;
F15B 2211/528; F15B 2211/565; F15B 2211/87

(86) Numéro de dépôt international:
**PCT/EP2023/053035**

(87) Numéro de publication internationale:
**WO 2023/152147 (17.08.2023 Gazette 2023/33)**

(54) **PROCÉDÉ POUR DIAGNOSTIQUER UN ÉTAT DE DÉGRADATION D'UN BOÎTIER D'ACCROCHAGE**

VERFAHREN ZUR DIAGNOSE EINES VERSCHLECHTERUNGSZUSTANDS EINES TÜRSCHLOSSES

METHOD FOR DIAGNOSING A STATE OF DETERIORATION OF AN UPLOCK

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **08.02.2022 FR 2201076**

(43) Date de publication de la demande:
**18.12.2024 Bulletin 2024/51**

(73) Titulaire: **Safran Landing Systems
78140 Vélizy-Villacoublay (FR)**

(72) Inventeur: **FRAVAL, Jérôme
77550 MOISSY-CRAMAYEL (FR)**

(74) Mandataire: **Cabinet Boettcher
5, rue de Vienne
75008 Paris (FR)**

(56) Documents cités:
**EP-A1- 3 498 602       EP-A1- 3 594 508
DE-B3- 10 251 821      US-A1- 2020 377 224**

## Description

L'invention est relative aux boîtiers d'accrochage tels que ceux qui sont utilisés dans les aéronefs pour la retenue, en position escamotée, d'atterrisseurs ou de trappes, et concerne plus particulièrement un procédé pour diagnostiquer un état de dégradation d'un tel boîtier d'accrochage.

L'invention concerne également un circuit hydraulique d'alimentation d'un vérin pour mettre en œuvre un tel procédé.

## ARRIERE PLAN DE L'INVENTION

On connaît des aéronefs munis d'atterrisseurs escamotables, de soutes destinées à recevoir ces atterrisseurs lorsque l'aéronef est en vol, et de trappes pour fermer ces soutes. Le déploiement et la rétraction des atterrisseurs, tout comme l'ouverture et la fermeture des trappes, sont effectués à l'aide d'actionneurs de manœuvre tels que des vérins.

Lorsque l'atterrisseur arrive en position rétractée, il est automatiquement maintenu dans cette position par un ou plusieurs boîtiers d'accrochage. Il en est de même lorsque la trappe arrive en position fermée.

De façon connue en soi, le boîtier d'accrochage comprend un crochet monté pivotant entre une position de libération et une position de retenue d'une olive fixée sur l'atterrisseur ou la trappe, et un organe de verrouillage qui est rappelé par un ressort vers une position de verrouillage du crochet quand celui-ci est amené en position de retenue, et qui est repoussé par un actionneur de déverrouillage pour permettre au crochet de basculer vers une position de libération et ainsi libérer l'olive.

L'actionneur de déverrouillage comprend généralement un vérin hydraulique comportant un corps à l'intérieur duquel peut coulisser une tige associée à un piston. La tige est agencée pour agir sur l'organe de verrouillage en vue de le repousser vers une position de déverrouillage.

Le document US 2020/377224 A1 divulgue un exemple de boîte d'accrochage connue. De plus, selon ce document, dans le cas où une partie inférieure crochue du crochet se rompt structurellement, l'olive tombera et, sous l'action de sollicitation d'un ressort, un levier indicateur tournera jusqu'à ce qu'il entre en contact avec une butée, et le levier indicateur sera espacée d'un capteur.

Le bon fonctionnement du boîtier d'accrochage, et en particulier sa performance au déverrouillage, peut être défini par le niveau d'effort d'actionnement requis par le vérin pour permettre la libération de l'olive. Ce niveau d'effort se caractérise notamment par les frottements générés dans les liaisons et contacts entre les différentes pièces composant le boîtier d'accrochage (joints d'étanchéité portés par le piston, liaison pivot de l'organe de verrouillage et du crochet, contact entre l'organe de verrouillage et le crochet...) .

Il est connu de minimiser ces frottements par un apport de graisse/lubrifiant pour garantir le bon fonctionnement du boîtier d'accrochage mais aussi son intégrité face à l'usure. Cet apport nécessite l'ouverture du boîtier d'accrochage et est généralement effectué selon un programme d'entretien régulier correspondant à une maintenance préventive effectuée selon des critères prédéterminés (durée de mise en service, nombre de cycles effectués...) et dont l'objectif est de réduire la probabilité de défaillance du boîtier d'accrochage. Ce type de maintenance nécessite notamment de connaître le comportement du boîtier d'accrochage, ses modes de dégradation et le temps moyen de bon fonctionnement entre deux avaries, et ne permet pas d'optimiser les fréquences d'opération de maintenance du boîtier d'accrochage. Il faudrait pour cela caractériser précisément le comportement du boîtier d'accrochage dans des environnements variés qui sont dépendants des conditions d'exploitation de l'aéronef par la compagnie qui l'exploite.

Pour pallier à ces inconvénients, il a été envisagé une maintenance prédictive consistant à mesurer la pression dans le vérin du boîtier d'accrochage pour surveiller en temps réel l'effort d'actionnement, et à définir un seuil de pression à partir duquel une opération de maintenance doit être réalisée.

Or, la vitesse de montée en pression d'un vérin de boîtier d'accrochage est généralement très importante (supérieure à 1000 bars par seconde). Ceci est le résultat d'un faible volume de fluide comprimé par le piston et a pour conséquence d'entraîner un déverrouillage très rapide du crochet. Cette rapidité rend difficile l'observation du temps et de la pression de déverrouillage du crochet.

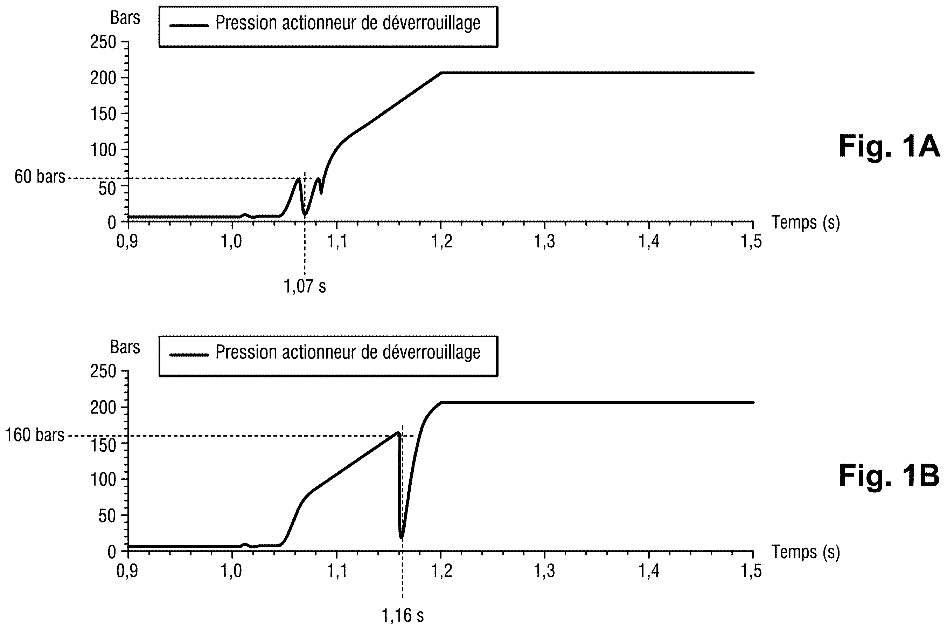

Les figures 1A et 1B illustrent deux exemples d'évolution de la pression dans un vérin de boîtier d'accrochage. La figure 1A correspond à un état de fonctionnement normal du boîtier d'accrochage pour lequel le temps et la pression de déverrouillage sont respectivement sensiblement égaux à 1,07 seconde et 60 bars. La figure 1B correspond à un état de fonctionnement dégradé du boîtier d'accrochage (le frottement s'est accru entre des pièces internes composant le boîtier d'accrochage suite par exemple à un défaut d'entretien dudit boîtier d'accrochage) pour lequel le temps et la pression de déverrouillage sont respectivement sensiblement égaux à 1,16 seconde et 160 bars.

Entre l'état de fonctionnement normal et l'état de fonctionnement dégradé, la différence de temps de déverrouillage est inférieure à 100 millisecondes, de sorte qu'une fréquence d'observation supérieure à 100 Hertz serait nécessaire au niveau du calculateur des atterrisseurs pour garantir une détection pertinente de la dégradation du boîtier d'accrochage.

Or, la fréquence d'exécution d'un tel calculateur est généralement sensiblement égale à 12,5 Hertz. L'augmenter aurait pour effet d'entraîner un accroissement de la charge du calculateur (on parle généralement de charge CPU de l'anglais « Central Processing Unit ») et donc du dimensionnement du calculateur.

D'après le document DE 102 51 821 B3, un circuit hydraulique d'alimentation d'un vérin est connu, le circuit comprenant une vanne de retard. Une source de fluide sous pression est reliée, via un port d'entrée, à un port d'alimentation de la vanne de retard, lequel mène d'une part, via un restricteur, à un tiroir et d'autre part, à une vanne de sortie. Dés que la source de fluide sous pression applique une pression de commande sur le port d'alimentation, le tiroir est pressé jusqu'à ce qu'il atteigne sa position finale, actionnant un élément d'actionnement sur la vanne de sortie et l'ouvrant. Si la vanne de sortie est ouverte, la port d'entrée est relié, via la port d'alimentation et via la vanne de sortie, à un port de sortie destiné à être relié au vérin.

OBJET DE L'INVENTION

L'invention a pour but de proposer une solution remédiant au moins en partie aux inconvénients précités.

RESUME DE L'INVENTION

A cet effet, on propose un procédé pour diagnostiquer un état de dégradation d'un boîtier d'accrochage pour la retenue d'une olive d'un élément mobile, le boîtier d'accrochage comprenant :

- un crochet pivotant entre une position de libération et une position de retenue de l'olive ;
- un organe de verrouillage pivotant entre une position de verrouillage dans laquelle le crochet est immobilisé en position de retenue par l'organe de verrouillage, et une position de déverrouillage dans laquelle le crochet est libre de se déplacer sous la poussée de l'olive de l'élément mobile ; et
- un actionneur de déverrouillage comportant un vérin hydraulique alimenté pour agir sur l'organe de verrouillage en vue de le repousser vers la position de déverrouillage.

Selon l'invention, le procédé comprend, lors d'une séquence de libération du crochet immobilisé en position de retenue par l'organe de verrouillage, les étapes suivantes :

a) alimenter le vérin en fluide sous pression avec une loi d'évolution selon laquelle la pression du fluide est, pendant une durée prédéterminée, inférieure à une pleine pression, puis égale à la pleine pression ;
b) déterminer un instant de libération du crochet et le comparer à l'instant où prend fin la durée prédéterminée ;
c) déduire de la comparaison réalisée à l'étape b) un état de dégradation du boîtier d'accrochage.

En retardant l'application de la pleine pression dans la chambre du vérin, un tel procédé permet de diagnostiquer une dégradation des performances de déverrouillage du boîtier d'accrochage avant la perte complète de la fonction de déverrouillage, et donc de programmer une maintenance du boîtier d'accrochage permettant de se prémunir d'une panne latente de celui-ci. Cette détection de la dégradation des performances de déverrouillage du boîtier d'accrochage se base uniquement sur le temps de libération du crochet et ne nécessite pas l'usage d'un capteur de pression.

De manière particulière, la durée prédéterminée est légèrement supérieure à une durée maximale de libération du crochet dans des conditions nominales de graissage/lubrification du boîtier d'accrochage.

De manière particulière, l'instant de libération du crochet est déterminé à partir d'un capteur de proximité agencé pour détecter la présence dudit crochet en position de retenue.

De manière particulière, le procédé comprend en outre l'étape d) consistant à programmer, à partir de l'état de dégradation du boîter d'accrochage, une maintenance dudit boîtier d'accrochage.

Selon un mode de réalisation particulier, la pression du fluide est, pendant la durée prédéterminée, sensiblement constante et égale à une pression prédéterminée.

Selon un autre mode de réalisation particulier, la pression du fluide est, pendant la durée prédéterminée, croissante par paliers jusqu'à atteindre une pression prédéterminée.

De manière particulière, la pression du fluide est, pendant la durée prédéterminée, égale à une pression inférieure à la pression prédéterminée puis égale à la pression déterminée.

Selon un autre mode de réalisation particulier, la pression du fluide est, pendant la durée prédéterminée, croissante de manière continue jusqu'à atteindre une pression prédéterminée.

De manière particulière, la pression prédéterminée est supérieure à une pression maximale de libération du crochet dans des conditions nominales de graissage/lubrification du boîtier d'accrochage.

L'invention concerne également un circuit hydraulique d'alimentation d'un vérin permettant la mise en œuvre d'un tel procédé. Le circuit comprenant une vanne de retard ayant un port d'entrée destiné à être relié à une source de fluide sous pression, un port de sortie destiné à être relié au vérin et un port de retour, et la vanne de retard comportant un distributeur comprenant :

- un port d'alimentation relié au port d'entrée via un premier restricteur ;
- un premier port de service formant le port de sortie ;
- un deuxième port de service formant le port de retour ;
- un tiroir mobile entre une position de limitation de pression vers laquelle il est rappelé automatiquement par un ressort et dans laquelle le port d'alimentation est relié au port de sortie et au port de retour via un troisième restricteur, et une position de pleine pression dans laquelle le tiroir obstrue le port de retour ; et

- une chambre de pilotage connectée au port d'entrée via un deuxième restricteur pour le déplacement du tiroir mobile.

De manière particulière, un premier clapet anti-retour est placé en parallèle du premier restricteur, le premier clapet anti-retour laissant passer le fluide du port d'alimentation vers le port d'entrée.

De manière particulière, un deuxième clapet anti-retour est placé en parallèle du deuxième restricteur, le deuxième clapet anti-retour laissant passer le fluide de la chambre de pilotage vers le port d'entrée.

L'invention concerne également un aéronef comprenant un boîtier d'accrochage pour la retenue d'un atterrisseur escamotable ou d'une trappe refermant une soute destinée à recevoir l'atterrisseur, le boîtier d'accrochage comportant un actionneur de déverrouillage qui comprend un vérin hydraulique relié à un tel circuit hydraulique.

BREVE DESCRIPTION DES DESSINS

L'invention sera mieux comprise à la lumière de la description qui suit, laquelle est purement illustrative et non limitative, et doit être lue en regard des figures annexées parmi lesquelles :

[Fig.1A] la figure 1A illustre l'évolution de la pression dans un vérin de déverrouillage équipant un boîtier d'accrochage selon l'art antérieur, dans un état de fonctionnement normal ;
[Fig.1B] la figure 1B est analogue à la figure 1A, le boîtier d'accrochage étant dans un état de fonctionnement dégradé ;
[Fig.2] la figure 2 est une vue schématique d'un dispositif de verrouillage d'une trappe d'un atterrisseur d'aéronef via un boîtier d'accrochage ;
[Fig.3] la figure 3 est une vue schématique d'un circuit hydraulique, selon un mode de réalisation particulier de l'invention, pour alimenter un vérin de déverrouillage d'un boîtier d'accrochage, pour mettre en œuvre le procédé illustré à la figure 7 ;
[Fig.4A] la figure 4A est une vue schématique de face d'un boîtier d'accrochage, illustré alors que le crochet est en position de retenue, l'organe de verrouillage étant en position de verrouillage.
[Fig.4B] la figure 4B est une vue analogue à celle de la figure 4A, illustrant le crochet en position de libération, l'organe de verrouillage étant en position de déverrouillage via l'action du vérin ;
[Fig.4C] la figure 4C est une vue analogue à celle de la figure 4A, illustrant le crochet en position de libération, l'organe de verrouillage étant en position de déverrouillage via l'action d'un dispositif de secours ;
[Fig.5] la figure 5 est une vue schématique d'un actionneur de déverrouillage selon un mode de réalisation particulier de l'invention ;
[Fig.6A] la figure 6A est une vue en coupe de la vanne de retard illustrée à la figure 5, dans un état de repos ;
[Fig.6B] la figure 6B est une vue analogue à la figure 6A, illustrant la vanne dans un état de pression limitée ;
[Fig.6C] la figure 6C est une vue analogue à la figure 6A, illustrant la vanne dans un état de pleine pression ;
[Fig.7] la figure 7 illustre un procédé pour diagnostiquer un état de dégradation d'un boîtier d'accrochage, selon un mode de réalisation particulier de l'invention ;
[Fig.8] la figure 8 illustre l'évolution de la pression dans le vérin de l'actionneur de déverrouillage illustré à la figure 5, le vérin étant alimenté en fluide sous pression avec une première loi d'évolution ;
[Fig.9] la figure 9 illustre une deuxième loi d'évolution de la pression d'alimentation du vérin ;
[Fig.10] la figure 10 une vue en coupe de la vanne de retard permettant de réaliser la deuxième loi d'évolution de la pression d'alimentation illustrée à la figure 9, dans un état de repos.
[Fig.11] la figure 11 illustre une troisième loi d'évolution de la pression d'alimentation du vérin
[Fig.12] la figure 12 une vue en coupe de la vanne de retard permettant de réaliser la troisième loi d'évolution de la pression d'alimentation illustré à la figure 11, dans un état de repos.

DESCRIPTION DETAILLEE DE L'INVENTION

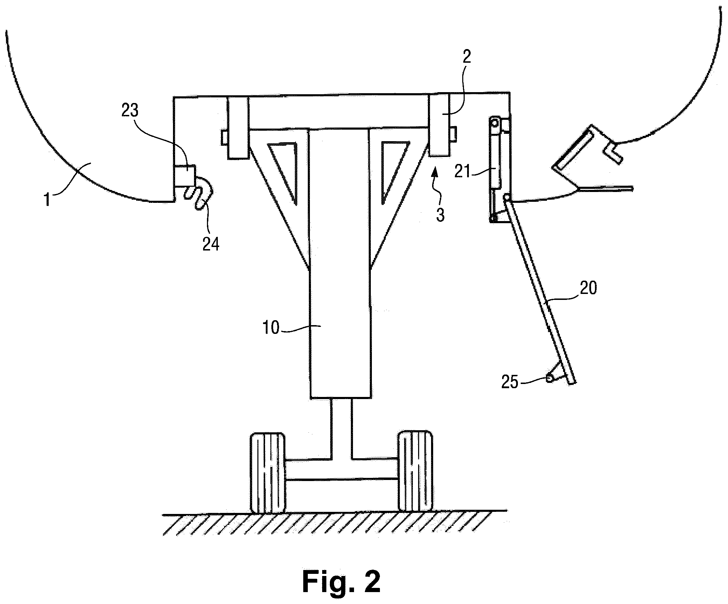

Comme illustré à la figure 2, l'invention est ici décrite en relation avec un aéronef 1 comprenant un atterrisseur 10 articulé sur une structure 2 de l'aéronef 1 entre une position déployée illustrée ici et une position rétractée dans laquelle l'atterrisseur 10 est reçu dans une soute 3 refermable par une trappe 20.

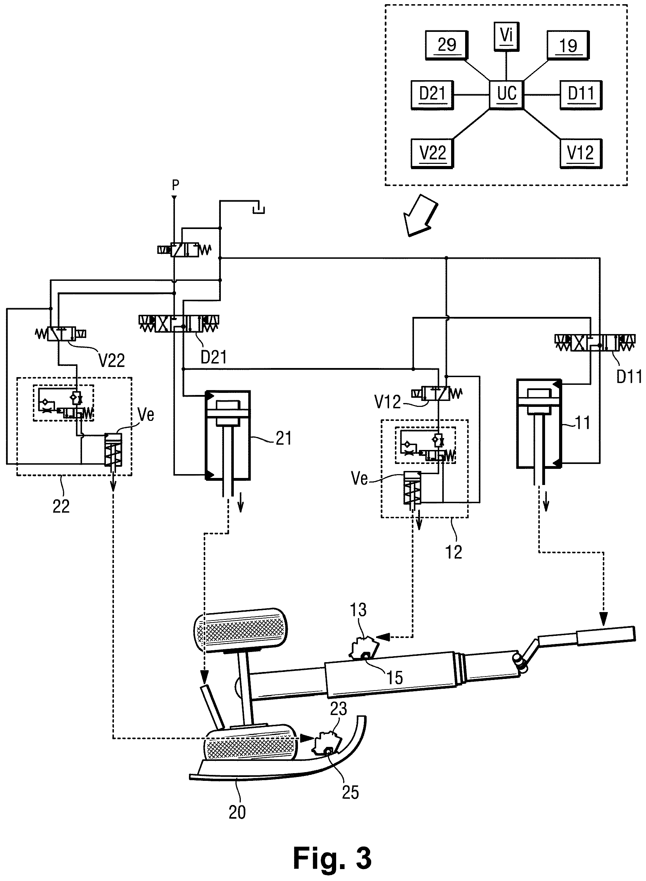

En référence à la figure 3, un vérin 11 double effet est attelé à l'atterrisseur 10 et permet de manœuvrer celui-ci entre la position rétractée et la position déployée. L'atterrisseur 10 est maintenu en position rétractée par un boîtier d'accrochage 13 muni d'un crochet 14 permettant de crocheter une olive 15 solidaire de l'atterrisseur 10 lorsque ce dernier arrive en position rétractée. Le décrochetage du crochet 14 est commandé par un actionneur de déverrouillage 12 hydromécanique.

De manière similaire, un vérin 21 double effet est attelé à la trappe 20 et permet de manœuvrer celle-ci entre une position ouverte permettant le déploiement et la rétraction de l'atterrisseur, et une position fermée refermant la soute 3. La trappe 20 est maintenue en position fermée par un boîtier d'accrochage 23 solidaire de la structure de l'aéronef 1. Le boîtier d'accrochage 23 est muni d'un crochet 24 permettant de crocheter une olive 25 solidaire de la trappe 20 lorsque ladite trappe 20 arrive en position fermée. Le décrochetage du crochet 24 est commandé par un actionneur de déverrouillage 22 hydromécanique.

Les boîtiers d'accrochage 13, 23 sont ici de structures identiques, tout comme les olives 15, 25 et les actionneurs de déverrouillage 12, 22.

Le vérin 11 servant à manœuvrer l'atterrisseur 10 est commandé par un distributeur monostable D11 relié à une source de fluide sous pression P. L'actionneur de déverrouillage 12 permet de désactiver le boîtier d'accrochage 13 et est commandé par une vanne monostable V12 reliée à la source de fluide sous pression P.

Le vérin 21 servant à manœuvrer la trappe 20 est commandé par un distributeur monostable D21 relié à la source de fluide sous pression P. L'actionneur de déverrouillage 22 permet de désactiver le boîtier d'accrochage 23 et est commandé par une vanne monostable V22 reliée à la source de fluide sous pression P.

Une vanne d'isolement $V_i$ monostable permet d'isoler, notamment pendant certaines phases de vol, les distributeurs D11, D21 et les vannes V12, V22 de la source de fluide sous pression P afin de limiter le risque de déploiement et de rétraction intempestifs de l'atterrisseur 10, mais aussi d'ouverture et de fermeture intempestives de la trappe 20.

On notera qu'en cas de défaillance du boîtier d'accrochage 13, l'atterrisseur 10 serait malgré tout retenu dans la soute 3 par la trappe 20 verrouillée en position fermée via le boîtier d'accrochage 23, de sorte que le verrouillage de la trappe 20 tend à limiter tout déploiement intempestif de l'atterrisseur 10.

L'aéronef 1 comprend également une unité de commande UC agencée pour commander les distributeurs D21, D22 reliés aux vérins 11, 21 et les vannes V12, V22 reliées aux actionneurs de déverrouillage 12, 22, de manière à contrôler le déploiement et la rétraction de l'atterrisseur 10, le verrouillage dudit atterrisseur 10 en position rétractée, l'ouverture et la fermeture de la trappe 20, et le verrouillage de la trappe 20 en position fermée.

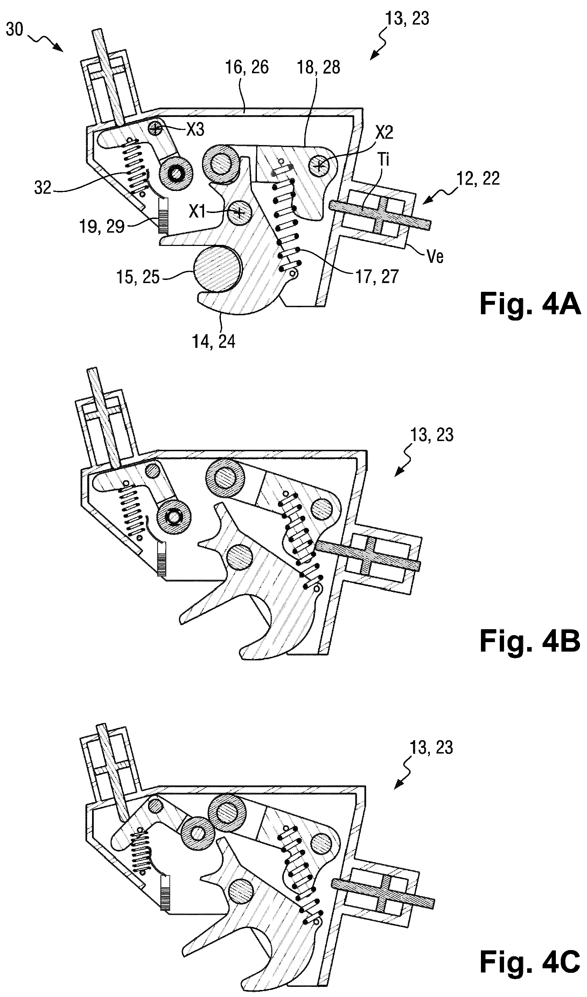

En référence à la figure 4A, les boîtiers d'accrochage 13, 23 comportent, de manière connue en soi, un corps 16, 26 portant un premier pivot et un deuxième pivot définissant des axes de pivotement X1, X2 parallèles. Le crochet 14, 24 est monté pivotant sur le premier pivot selon l'axe X1 entre une position de retenue (figure 4A) et une position de libération vers laquelle il est rappelé par un ressort 17, 27 (figures 4B, 4C). Le crochet 14, 24 comporte une partie de crochetage dans laquelle l'olive 15, 25 de l'atterrisseur 10 (ou de la trappe 20) est destinée à être retenue par le boîtier d'accrochage 13, 23 pour immobiliser ledit atterrisseur 10 en position rétractée (ou ladite trappe 20 en position fermée). Pour ce faire, l'atterrisseur 10 (ou la trappe 20) est déplacé par le vérin 11, 21 et l'olive 15, 25 repousse le crochet 14, 24 vers la position de retenue dans laquelle il retient l'olive 15, 25. A cet effet, un organe de verrouillage 18, 28 est monté pivotant sur le deuxième pivot selon l'axe X2 et comporte à une extrémité un galet en appui sur un profil de came du crochet 14, 24. L'organe de verrouillage 18, 28 pivote entre une position de verrouillage vers laquelle il est rappelé automatiquement par le ressort 17, 27 et qu'il atteint automatiquement quand le crochet 14, 24 arrive en position de retenue (figure 4A), et une position de déverrouillage (les figures 4B, 4C). Dans la position de verrouillage, l'organe de verrouillage 18, 28 bloque le crochet 14, 24 en position de retenue. Pour libérer l'olive 15, 25, l'actionneur de déverrouillage 12, 22 repousse l'organe de verrouillage 18, 28 vers la position de déverrouillage, ce qui permet au crochet 14, 24 de pivoter vers la position de libération et donc à l'olive 15, 25 de quitter le crochet 14, 24.

De manière connue, les boîtiers d'accrochage 13, 23 comportent aussi un capteur de proximité 19, 29 de type inductif relié à l'unité de commande UC et agencé pour détecter la présence du crochet 14, 24 en position de retenue.

Les boîtiers d'accrochage 13, 23 comportent également un actionneur de secours 30 à même de déverrouiller le crochet 14, 24 si l'actionneur de déverrouillage 12, 22 est inopérant. A cet effet, un organe de déverrouillage 31 est monté pivotant sur un troisième pivot selon un axe X3 parallèle aux axes X1, X2, et comporte à une extrémité un galet. L'organe de déverrouillage 31 pivote entre une position de repos vers laquelle il est rappelé automatiquement par un ressort 32 (figures 4A, 4B), et une position de déverrouillage dans laquelle le galet de l'organe de déverrouillage 31 est en appui sur le galet de l'organe de verrouillage 18, 28 (figure 4C). Pour libérer l'olive 15, 25, l'actionneur de secours 30 repousse l'organe de déverrouillage 31 qui, en rejoignant sa position de déverrouillage, repousse à son tour l'organe de verrouillage 18, 28 vers sa position de déverrouillage, ce qui permet au crochet 14, 24 de pivoter vers la position de libération et donc à l'olive 15, 25 de quitter le crochet 14, 24.

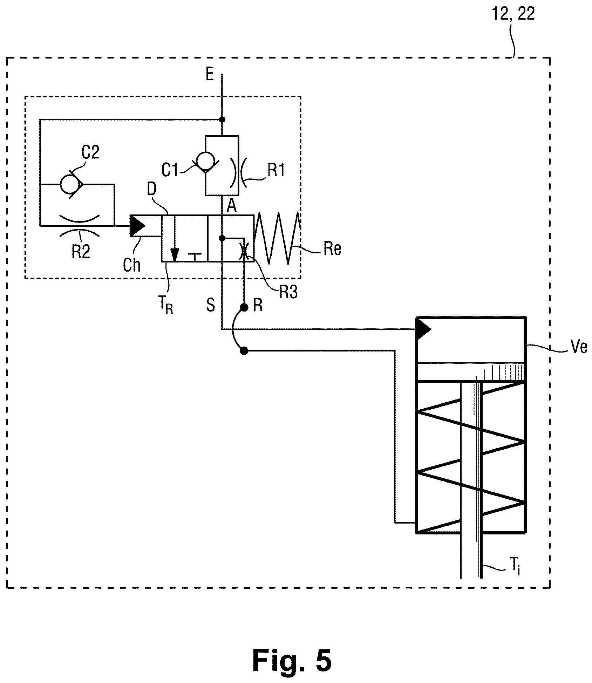

En référence à la figure 5, les actionneurs de déverrouillage 12, 22 comporte un vérin $V_e$ hydraulique comprenant un corps dans lequel une tige $T_i$ coulisse en étant associée à un piston qui définit avec le corps une chambre. L'organe de verrouillage 18, 28 est en position de verrouillage quand la tige $T_i$ est en position rentrée (figure 4A), et est en position de déverrouillage quand la tige $T_i$ est en position sortie (figure 4B).

L'actionneur de déverrouillage 12, 22 comporte également une vanne $V_r$ dite « de retard » reliée à la chambre du vérin $V_e$. La vanne de retard $V_r$ comprend :

- un port d'entrée E relié à la source de fluide sous pression P via la vanne de commande V12, V22,
- un port de sortie S relié à la chambre du vérin $V_e$, et
- un port de retour R relié à un réservoir.

La vanne de retard $V_r$ comprend également un distributeur D comportant :

- un port d'alimentation A relié au port d'entrée E via un premier restricteur R1 et un premier clapet anti-retour C1 disposés en parallèle l'un de l'autre, le premier clapet anti-retour C1 laissant passer le fluide du port d'alimentation A vers le port d'entrée ;
- un premier port de service formant le port de sortie S,
- un deuxième port de service formant le port de retour R,
- un tiroir $T_r$ mobile entre une position dite « de limitation de pression » vers laquelle il est rappelé automatiquement par un ressort $R_e$ et dans laquelle le port d'alimentation A est relié au port de sortie S et au port de retour R via un troisième restricteur R3, et une position dite « de pleine pression » dans laquelle il obstrue le port de retour R ; et
- une chambre de pilotage $C_H$ pour le déplacement du tiroir $T_r$, connectée au port d'entrée E via un deuxième restricteur R2 et un deuxième clapet anti-retour C2 disposés en parallèle l'un de l'autre, le deuxième clapet anti-retour C2 laissant passer le fluide de la chambre de pilotage $C_H$ vers le port d'entrée E.

Le fonctionnement de la vanne de retard $V_r$ est le suivant.

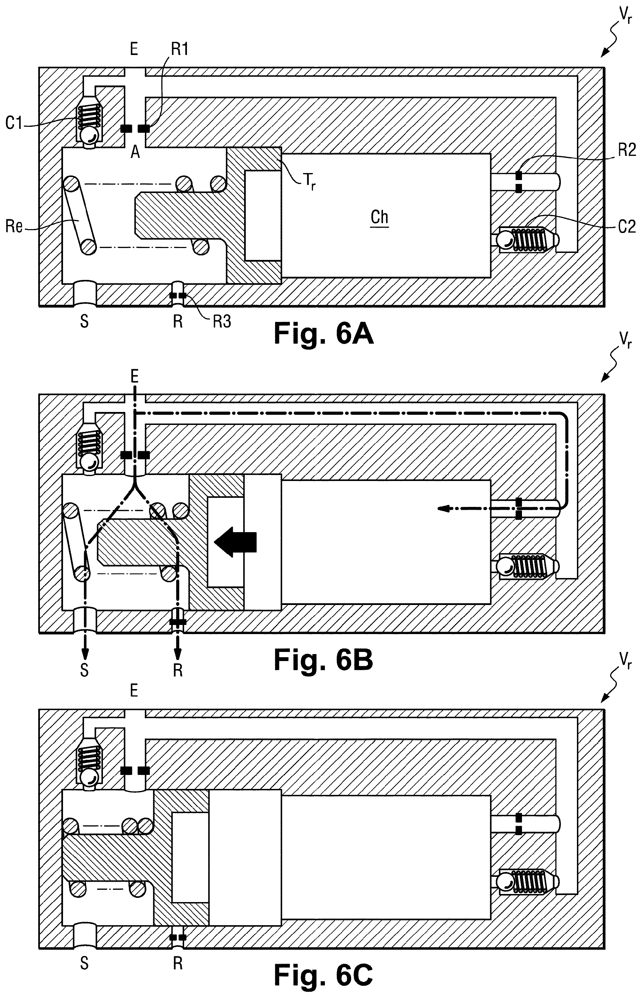

Lorsqu'un fluide sous pression entre dans la vanne de retard $V_r$ par le port d'entrée E et que le tiroir $T_r$ est dans sa position de repos (figure 6A), le fluide tend à rejoindre, de manière quasi-simultanée, le port de sortie S via le premier restricteur R1, le port de retour R via le premier restricteur R1 et le troisième restricteur R3, et la chambre de pilotage $C_H$ du distributeur D via le deuxième restricteur R2. La pression du fluide sortant par le port de sortie S résulte alors de la perte de charge au travers du premier restricteur R1 et du troisième restricteur R3, et est donc inférieure à celle entrant par le port d'entrée E. Dans le même temps, la pression régnant dans la chambre de pilotage $C_H$ tend à augmenter et donc à entraîner un déplacement du tiroir $T_r$ vers sa position de pleine pression (figure 6B). Cette vitesse de déplacement du tiroir $T_r$ est définie par le deuxième restricteur R2.

Au fur et à mesure que la pression augmente dans la chambre de pilotage $C_H$, le tiroir $T_r$ finit par rejoindre sa position de pleine pression dans laquelle il obstrue complètement le port de retour R (figure 6C). La pression du fluide sortant par le port de sortie S résulte alors de la perte de charge au travers du premier restricteur R1 et devient ainsi sensiblement égale à celle entrant par le port d'entrée E.

Il apparaît donc qu'avant de devenir sensiblement égale à celle entrant par le port d'entrée E, la pression du fluide sortant du port de sortie S se retrouve limitée pendant une durée dépendant de la vitesse de déplacement du tiroir $T_r$, qui est elle-même définie par le deuxième restricteur R2.

Lorsque le port d'entrée E de la vanne de retard $V_r$ n'est plus alimenté en fluide sous pression, la pression régnant dans la chambre de pilotage $C_H$ tend à diminuer et donc à entraîner un déplacement du tiroir $T_r$ vers sa position de limitation de pression sous l'effet du ressort $R_e$. La dépressurisation de la chambre de pilotage $C_H$ se fait au travers du deuxième clapet anti-retour C2, et celle du port de sortie S au travers du premier clapet anti-retour C1.

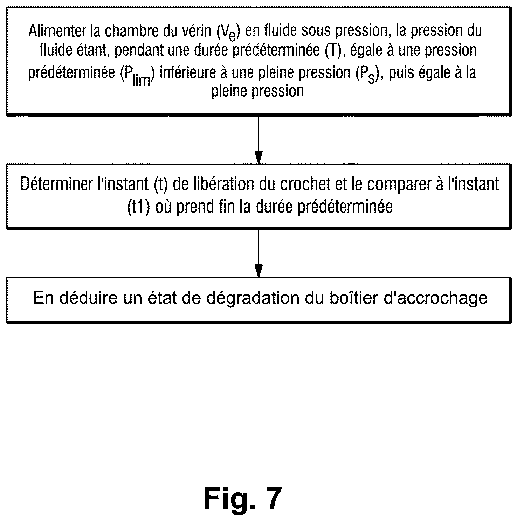

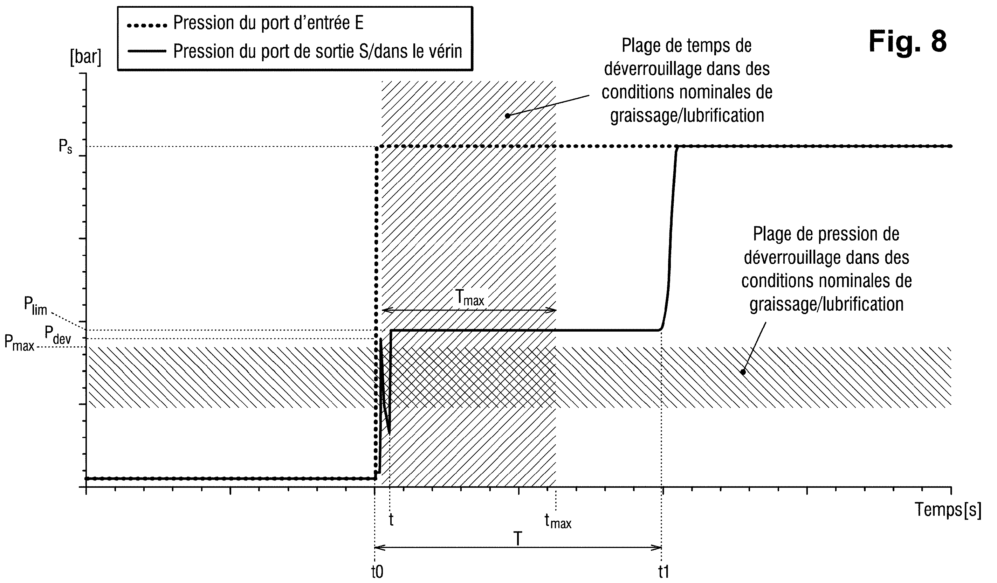

Afin de surveiller l'intégrité du boîtier d'accrochage 13, 23 et ainsi se prémunir d'une panne latente de celui-ci, l'unité de commande UC est agencée pour mettre en œuvre, via la vanne de retard $V_r$, un procédé pour diagnostiquer un état de dégradation du boîtier d'accrochage 13, 23. En référence aux figures 7 et 8, les différentes étapes du procédé vont maintenant être détaillées.

Lors d'une séquence de déverrouillage de l'atterrisseur 10 ou de la trappe 20, la vanne V12, V22 est tout d'abord commandée pour connecter, à partir d'un instant $t_0$, l'actionneur de déverrouillage 12, 22 à la source de fluide sous pression P. La pression du port d'entrée E de l'actionneur de déverrouillage est alors sensiblement égale à la pression $P_s$ de la source de fluide sous pression P qui est généralement égale à 206 bars ou 350 bars en fonction de la pression nominale de la génération hydraulique de l'aéronef, et qui est ici égale à 206 bars.

Jusqu'à un instant $t_1$ (correspondant à une première phase), la pression du port de sortie S, et donc celle de la chambre du vérin $V_e$, est inférieure à celle du port d'entrée E et est limitée par la vanne de retard $V_r$. La vanne de retard $V_r$ et, en particulier, ses premier et troisième restricteurs R1, R3 sont agencés pour que la pression du port de sortie S soit, jusqu'à l'instant $t_1$, au plus égale à une pression $P_{lim}$ légèrement supérieure à une pression de déverrouillage maximale $P_{max}$ représentative d'un niveau d'effort maximum requis pour libérer le crochet 14, 24 via le vérin $V_e$ dans des conditions nominales de graissage/lubrification du boîtier d'accrochage 13, 23. La pression $P_{max}$ est généralement comprise entre 70 bars et 90 bars, et est ici égale à 85 bars. La pression $P_{lim}$ est généralement comprise entre 90 bars et 110 bars, et est ici égale à 95 bars.

Les instants $t_0$ et $t_1$ définissent une durée $T$ correspondant sensiblement au temps que met le tiroir $T_r$ de la vanne de retard $V_r$ pour passer de sa position de limite de pression à sa position de pleine pression. La vanne de retard $V_r$ et en particulier son deuxième restricteur R2 sont agencés pour que la durée $T$ soit supérieure à une durée $T_{max}$ représentative d'un temps de déverrouillage maximum requis pour libérer le crochet 14, 24 via le vérin $V_e$ dans des conditions nominales de graissage/lubrification du boîtier d'accrochage 13, 23. La durée T est ici comprise entre 0,5 seconde et 1 seconde.

Après l'instant $t_1$ (correspondant à une deuxième phase), la pression du port de sortie S, et donc à celle de la chambre du vérin $V_e$, tendent à devenir sensiblement égale à la pression $P_S$ de la source P.

La pression du port de sortie S est ainsi, pendant la durée $T$, sensiblement constante et égale à la pression $P_{lim}$, puis égale à la pression $P_s$.

Pendant la séquence de déverrouillage de l'atterrisseur 10 (ou de la trappe 20), l'unité de commande UC détermine, via le capteur de proximité 19, 29, l'instant $t$ où le crochet 14, 24 quitte la position de retenue, autrement dit le moment $t$ où la tige $T_i$ du vérin $V_e$ a sensiblement fini de repousser l'organe de verrouillage 18, 28 vers sa position de déverrouillage. L'instant $t$ correspond au moment où la pression dans la chambre du vérin $V_e$ atteint un minimum après avoir chuté brutalement lors du déplacement de la tige $T_i$.

L'instant $t$ est ensuite comparé à l'instant *t1*.

Si l'instant $t$ se situe avant l'instant *t1* comme cela est illustré à la figure 8, alors la pression de déverrouillage $P_{dev}$ requise par le vérin $V_e$ pour libérer le crochet 14, 24 est inférieure ou égale à la pression de déverrouillage maximale $P_{max}$ représentative du niveau d'effort maximum requis pour libérer le crochet 14, 24 dans des conditions nominales de graissage/lubrification du boîtier d'accrochage 13, 23. On en déduit que le boîtier d'accrochage 13, 23 est dans un état nominal de graissage/lubrification et ne nécessite pas d'apport de graisse ou de lubrifiant.

Au contraire, si l'instant $t$ se situe après l'instant *t1*, alors la pression de déverrouillage $P_{dev}$ requise par le vérin $V_e$ pour libérer le crochet 14, 24 est supérieure à la pression de déverrouillage maximale $P_{max}$ représentative du niveau d'effort maximum requis pour libérer le crochet 14, 24 dans des conditions nominales de graissage/lubrification du boîtier d'accrochage 13, 23. On en déduit que le boîtier d'accrochage 13, 23 est dans un état dégradé et nécessite un apport de graisse ou de lubrifiant.

On comprendra qu'en retardant l'application de la pleine pression dans la chambre du vérin $V_e$ pendant la durée $T,$ un tel procédé permet de diagnostiquer une dégradation des performances de déverrouillage du boîtier d'accrochage 13, 23 avant la perte complète de la fonction de déverrouillage, et donc de programmer une maintenance du boîtier d'accrochage 13, 23 permettant de se prémunir d'une panne latente de celui-ci (apport de lubrifiant/graisse, démontage du boîtier pour inspection et/ou remplacement d'une pièce dudit boîtier...). La détection de la dégradation des performances de déverrouillage du boîtier d'accrochage 13, 23 se base uniquement sur le temps de libération du crochet 14, 24 et ne nécessite pas l'usage d'un capteur de pression.

Un niveau d'état de dégradation $N_d$ des performances de déverrouillage du boîtier d'accrochage 13, 23 peut en outre être calculé par l'unité de commande UC via l'équation suivante :

$$N_d = \frac{t - t_{max}}{t_M - t_{max}}$$

où :

- $t_{max}$ définit avec $t_0$ la durée $T_{max}$ ; et

- $t_M$ est un instant prédéfini au-delà duquel une opération de maintenance est requise (l'aéronef 1 n'est plus autorisé à voler).

Exprimé en pourcentage, le niveau d'état de dégradation $N_d$ est enregistré dans une mémoire de l'unité de commande UC afin notamment de pouvoir observer une évolution du niveau d'état de dégradation $N_d$ du boîtier d'accrochage 13, 23 au cours de plusieurs séquences de déverrouillage successifs de l'atterrisseur 10 (ou de la trappe 20) et ainsi estimer un nombre de séquences de déverrouillage maximum autorisées avant de procéder à une opération de maintenance.

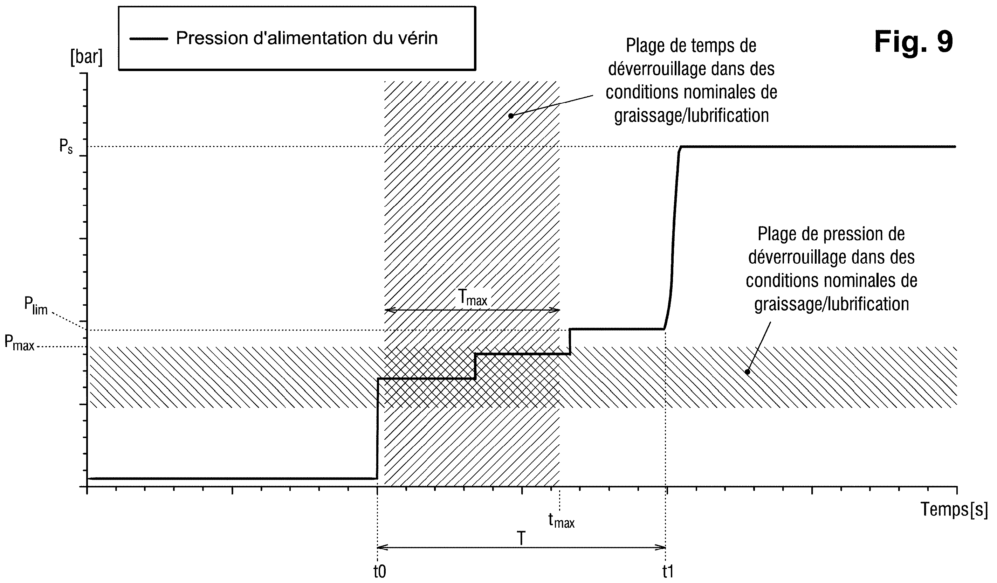

Bien que la pression d'alimentation du vérin $V_e$ soit ici sensiblement constante pendant la durée $T$ (correspondant à la première phase), elle peut aussi augmenter par paliers. Par exemple, la pression d'alimentation du vérin $V_e$ peut, pendant la durée $T,$ être égale à une première pression inférieure à la pression $P_{lim}$, puis être égale à une deuxième pression supérieure à la première pression et inférieure à la pression $P_{lim}$, puis être égale à la pression $P_{lim}$ (figure 9).

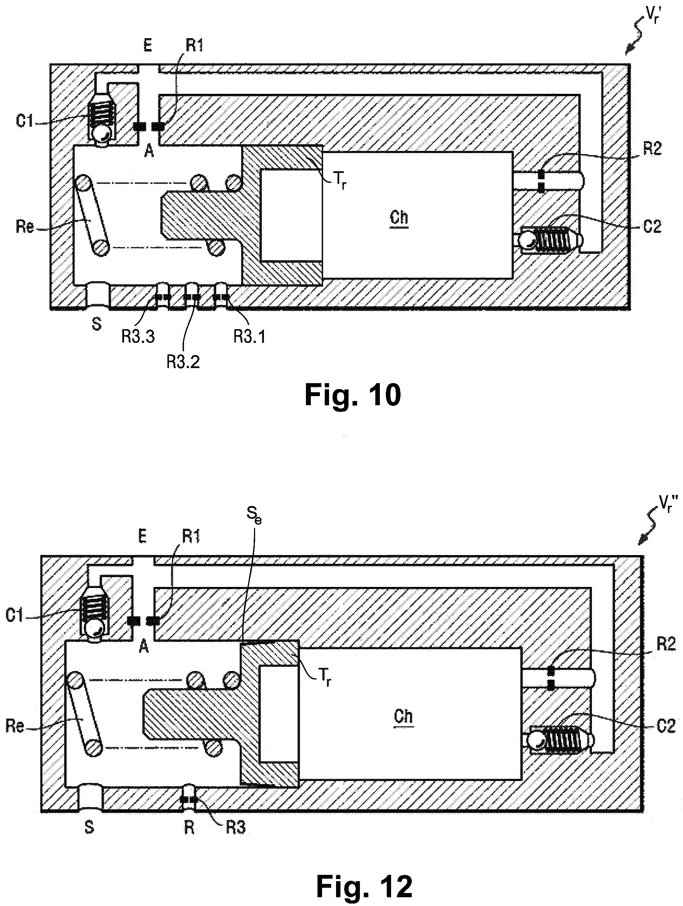

Une telle loi d'évolution de la pression d'alimentation du vérin $V_e$ peut être réalisée via une vanne $V_r'$ se distinguant de la vanne $V_r$ en ce qu'elle comprend non pas un mais trois ports de retour R chacun muni d'un troisième restricteur R3.1, R3.2, R3.3 (figure 10).

Lorsqu'un fluide sous pression entre dans la vanne de retard $V_r'$ par le port d'entrée E et que le tiroir $T_r$ est dans sa position de repos (représentée à la figure 10), le fluide tend à rejoindre, de manière quasi-simultanée :

- le port de sortie S via le premier restricteur R1,
- les ports de retour R via le premier restricteur R1 et les troisièmes restricteurs R3.1, R3.2, R3.3, et
- la chambre de pilotage $C_H$ du distributeur D via le deuxième restricteur R2.

La pression du fluide sortant par le port de sortie S résulte alors de la perte de charge au travers du premier restricteur R1 et des troisièmes restricteurs R3.1, R3.2, R3.3, et est donc inférieure à celle entrant par le port d'entrée E. Dans le même temps, la pression régnant dans la chambre de pilotage $C_H$ tend à augmenter et donc à entraîner un déplacement du tiroir $T_r$ vers sa position de pleine pression (non illustrée). Cette vitesse de déplacement du tiroir $T_r$ est définie par le deuxième restricteur R2.

Au fur et à mesure que la pression augmente dans la chambre de pilotage $C_H$, le tiroir $T_r$ se déplace pour rejoindre sa position de pleine pression en obstruant tour à tour les troisième restricteurs R3.1, R3.2, R3.3, de sorte que la pression du fluide sortant par le port de sortie S résulte ;

- dans un premier temps, de la perte de charge au travers du premier restricteur R1 et des troisièmes restricteurs R3.1, R3.2, R3.3 (le tiroir $T_r$ obstrue

aucun des trois ports de retour R) ;

- dans un deuxième temps, de la perte de charge au travers du premier restricteur R1 et des troisièmes restricteurs R3.2, R3.3 (le tiroir $T_r$ obstrue un des trois ports de retour R, plus précisément le port de retour R muni du restricteur R3.1) ;
- dans un troisième temps, de la perte de charge au travers du premier restricteur R1 et du troisième restricteur R3.3 (le tiroir $T_r$ obstrue deux des trois ports de retour R, plus précisément les ports de retour R munis des restricteurs R3.1, R3.2) ; et
- dans un quatrième temps, de la perte de charge au travers du premier restricteur R1 (le tiroir $T_r$ obstrue l'ensemble des ports de retour R) et devient ainsi sensiblement égale à celle entrant par le port d'entrée E.

Il apparaît donc qu'avant de devenir sensiblement égale à la pression entrant par le port d'entrée E, la pression du fluide sortant du port de sortie S se retrouve limitée à une première pression puis à une deuxième pression pendant une durée dépendant de la vitesse de déplacement du tiroir $T_r$, qui est elle-même définie par le deuxième restricteur R2.

Lorsque le port d'entrée E de la vanne de retard $V_r'$ n'est plus alimenté en fluide sous pression, la pression régnant dans la chambre de pilotage $C_H$ tend à diminuer et donc à entraîner un déplacement du tiroir $T_r$ vers sa position de limitation de pression sous l'effet du ressort $R_e$. La dépressurisation de la chambre de pilotage $C_H$ se fait au travers du deuxième clapet anti-retour C2, et celle du port de sortie S au travers du premier clapet anti-retour C1.

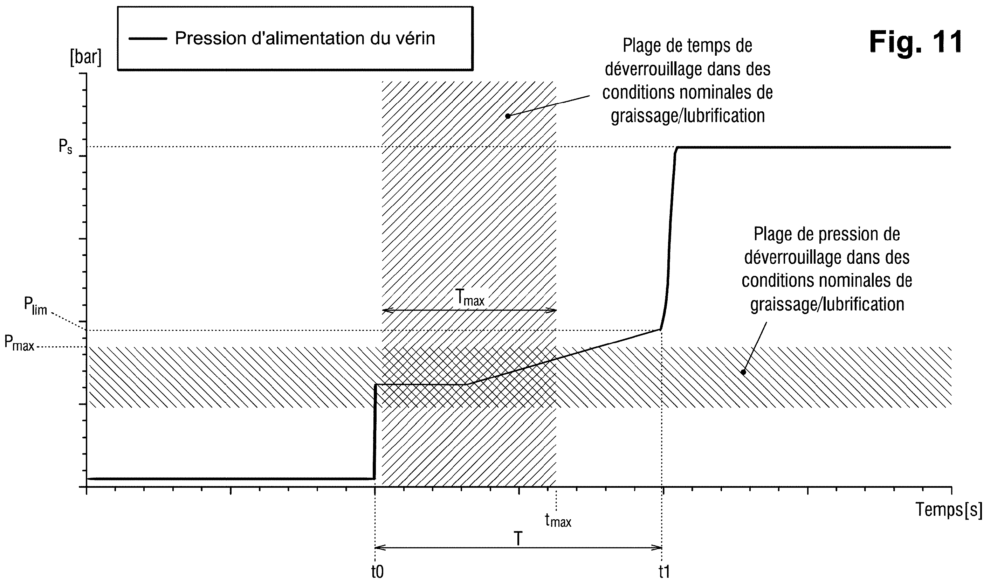

Il peut aussi être prévu que la pression d'alimentation du vérin $V_e$ augmente de manière continue. Par exemple, la pression d'alimentation du vérin $V_e$ peut, pendant la durée *T*, croître de manière linéaire jusqu'à atteindre la pression $P_{lim}$ (figure 11).

Une telle loi d'évolution de la pression d'alimentation du vérin $V_e$ peut être réalisée via une vanne $V_r''$ se distinguant de la vanne $V_r$ en ce que le tiroir $T_r$ comporte une surface extérieure $S_e$ de forme tronconique agencée pour que ledit tiroir $T_r$ obstrue, lors de son passage de la position de limitation de pression à la position de pleine pression, le port de retour R de manière plus progressive que si la surface extérieure $S_e$ était de forme cylindrique (pour une vitesse donnée de déplacement du tiroir Tr).

Lorsqu'un fluide sous pression entre dans la vanne de retard $V_r''$ par le port d'entrée E et que le tiroir $T_r$ est dans sa position de repos (représentée à la figure 12), le fluide tend à rejoindre, de manière quasi-simultanée, le port de sortie S via le premier restricteur R1, le port de retour R via le premier restricteur R1 et le troisième restricteur R3, et la chambre de pilotage $C_H$ du distributeur D via le deuxième restricteur R2. La pression du fluide sortant par le port de sortie S résulte alors de la perte de charge au travers du premier restricteur R1 et du troisième restricteur R3, et est donc inférieure à celle entrant par le port d'entrée E. Dans le même temps, la pression régnant dans la chambre de pilotage $C_H$ tend à augmenter et donc à entraîner un déplacement du tiroir $T_r$ vers sa position de pleine pression. Cette vitesse de déplacement du tiroir $T_r$ est définie par le deuxième restricteur R2.

Au fur et à mesure que la pression augmente dans la chambre de pilotage $C_H$, le tiroir $T_r$ tend à rejoindre sa position de pleine pression en obstruant progressivement le port de retour R et ce jusqu'à l'obstruer complètement. La pression du fluide sortant par le port de sortie S résulte alors de la perte de charge au travers du premier restricteur R1 et devient ainsi sensiblement égale à celle entrant par le port d'entrée E.

Il apparaît donc qu'avant de devenir sensiblement égale à la pression entrant par le port d'entrée E, la pression du fluide sortant du port de sortie S croît de manière linéaire pendant une durée dépendant de la vitesse de déplacement du tiroir $T_r$, qui est elle-même définie par le deuxième restricteur R2.

Lorsque le port d'entrée E de la vanne de retard $V_r''$ n'est plus alimenté en fluide sous pression, la pression régnant dans la chambre de pilotage $C_H$ tend à diminuer et donc à entraîner un déplacement du tiroir $T_r$ vers sa position de limitation de pression sous l'effet du ressort $R_e$. La dépressurisation de la chambre de pilotage $C_H$ se fait au travers du deuxième clapet anti-retour C2, et celle du port de sortie S au travers du premier clapet anti-retour C1.

En déterminant l'instant t de libération du crochet 14, 24, il est alors possible, avec de telles lois d'évolution de la pression d'alimentation du vérin $V_e$, de remonter à la pression de déverrouillage $P_{dev}$, et de déterminer le niveau d'état de dégradation $N_d$ des performances du boîtier d'accrochage 13, 23 et de programmer une maintenance dudit boîtier d'accrochage 13, 23 en adéquation avec son état de dégradation. Par exemple, une pression de déverrouillage $P_{dev}$ légèrement inférieure ou supérieure à la pression de déverrouillage maximale $P_{max}$ peut être représentative d'un défaut de lubrification/graissage du boîtier d'accrochage. A l'inverse, une pression de déverrouillage $P_{dev}$ largement supérieure à la pression de déverrouillage maximale $P_{max}$ peut être représentative d'un défaut de lubrification/graissage du boîtier d'accrochage ou d'un arrachement d'un revêtement de surface d'une pièce composant le boîtier d'accrochage 13, 23.

En déterminant l'instant *t* de libération du crochet 14, 24 au cours de plusieurs séquences de déverrouillage de l'atterrisseur 10 (ou de la trappe 20), il est également possible de déterminer une évolution dudit instant *t* de libération et donc d'affiner la programmation de la maintenance du boîtier d'accrochage 13, 23. Par exemple, une stabilité de l'instant *t* de libération pourra permettre de retarder la maintenance du boîtier d'accrochage 13, 23. A l'inverse, une évolution croissante de l'instant *t* de libération pourra permettre de programmer avec précision la maintenance du boîtier d'accrochage 13, 23. Aussi, une importante diminution de l'instant *t* de libération pourra confirmer un arrachement d'un revêtement de surface d'une pièce composant le boîter d'accrochage 13, 23.

En déterminant l'évolution le niveau d'état de dégradation $N_d$ des performances de déverrouillage du boîtier d'accrochage 13, 23 au cours de plusieurs séquences de déverrouillage de l'atterrisseur 10 (ou de la trappe 20), il est aussi possible d'affiner la programmation de la maintenance du boîtier d'accrochage 13, 23. Par exemple, une importante augmentation du niveau d'état de dégradation $N_d$ pourra engendrer une opération de maintenance même si l'instant *t* est inférieur à $t_{max}$.

Bien entendu, l'invention n'est pas limitée au mode de réalisation décrit mais englobe toute variante entrant dans le champ de l'invention telle que définie par les revendications.

Bien qu'ici le procédé soit décrit en application à l'actionneur de déverrouillage, il peut aussi être décrit en application à l'actionneur de secours.

Les actionneurs peuvent être des vérins à simple ou double effet.

La vanne de retard peut être intégrée au vérin $V_e$.

L'invention est applicable à tout boîtier de verrouillage utilisable par exemple pour le verrouillage de trappe sur d'autres véhicules que des aéronefs ou sur des bâtiments.

## Revendications

**1.** Procédé pour diagnostiquer un état de dégradation d'un boîtier d'accrochage (13, 23) pour la retenue d'une olive (15, 25) d'un élément mobile (10, 20), le boîtier d'accrochage comprenant :

- un crochet (14, 24) pivotant entre une position de libération et une position de retenue de l'olive ;
- un organe de verrouillage (18, 28) pivotant entre une position de verrouillage dans laquelle le crochet est immobilisé en position de retenue par l'organe de verrouillage, et une position de déverrouillage dans laquelle le crochet est libre de se déplacer sous la poussée de l'olive de l'élément mobile ; et
- un actionneur de déverrouillage (12, 22) comportant un vérin ($V_e$) hydraulique alimenté pour agir sur l'organe de verrouillage en vue de le repousser vers la position de déverrouillage ;

le procédé comprenant, lors d'une séquence de libération du crochet immobilisé en position de retenue par l'organe de verrouillage, les étapes suivantes :

a) alimenter le vérin en fluide sous pression avec une loi d'évolution selon laquelle la pression du fluide est, pendant une durée prédéterminée ($T$), inférieure à une pleine pression ($P_s$), puis égale à la pleine pression ;
b) déterminer un instant ($t$) de libération du crochet et le comparer à l'instant ($t_1$) où prend fin la durée prédéterminée ;
c) déduire de la comparaison réalisée à l'étape b) un état de dégradation du boîtier d'accrochage.

**2.** Procédé selon la revendication 1, dans lequel la durée prédéterminée ($T$) est légèrement supérieure à une durée maximale ($T_{max}$) de libération du crochet (14, 24) dans des conditions nominales de graissage/lubrification du boîtier d'accrochage (13, 23).

**3.** Procédé selon l'une quelconque des revendications précédentes, dans lequel l'instant ($t$) de libération du crochet (14, 24) est déterminé à partir d'un capteur de proximité (19, 29) agencé pour détecter la présence dudit crochet en position de retenue.

**4.** Procédé selon l'une quelconque des revendications précédentes, comprenant en outre l'étape d) consistant à programmer, à partir de l'état de dégradation du boîtier d'accrochage (13, 23), une maintenance dudit boîtier d'accrochage.

**5.** Procédé selon l'une quelconque des revendications précédentes, dans lequel la pression du fluide est, pendant la durée prédéterminée ($T$), sensiblement constante et égale à une pression prédéterminée ($P_{lim}$).

**6.** Procédé selon l'une quelconque des revendications 1 à 4, dans lequel la pression du fluide est, pendant la durée prédéterminée ($T$), croissante par paliers jusqu'à atteindre une pression prédéterminée ($P_{lim}$).

**7.** Procédé selon la revendication 6, dans lequel la pression du fluide est, pendant la durée prédéterminée ($T$), égale à une pression inférieure à la pression prédéterminée ($P_{lim}$) puis égale à la pression déterminée ($P_{lim}$).

**8.** Procédé selon l'une quelconque des revendications 1 à 4, dans lequel la pression du fluide est, pendant la durée prédéterminée ($T$), croissante de manière continue jusqu'à atteindre une pression prédéterminée ($P_{lim}$).

**9.** Procédé selon l'une quelconque des revendications 5 à 8, dans lequel la pression prédéterminée ($P_{lim}$) est supérieure à une pression maximale ($P_{max}$) de libération du crochet (14, 24) dans des conditions nominales de graissage/lubrification du boîtier d'accrochage (13, 23).

**10.** Circuit hydraulique d'alimentation d'un vérin ($V_e$) permettant la mise en œuvre du procédé selon l'une quelconque des revendications 1 à 9, le circuit comprenant une vanne de retard ($V_r$, $V_r'$, $V_r''$) ayant un port d'entrée (E) destiné à être relié à une source de fluide sous pression (P), un port de sortie (S) destiné à être relié au vérin et au moins un port de retour (R), et la vanne de retard comportant un distributeur (D) comprenant :

  - un port d'alimentation (A) relié au port d'entrée via un premier restricteur (R1) ;
  - un premier port de service formant le port de sortie,
  - au moins un deuxième port de service formant le port de retour ;
  - un tiroir ($T_r$) mobile entre une position de limitation de pression vers laquelle il est rappelé automatiquement par un ressort ($R_e$) et dans laquelle le port d'alimentation est relié au port de sortie et au port de retour via un troisième restricteur (R3, R3.1, R3.2, R3.3), et une position de pleine pression dans laquelle le tiroir obstrue le port de retour ; et
  - une chambre de pilotage ($C_h$) connectée au port d'entrée via un deuxième restricteur (R2) pour le déplacement du tiroir mobile.

**11.** Circuit hydraulique selon la revendication 10, dans lequel un premier clapet anti-retour (C1) est placé en parallèle du premier restricteur (R1), le premier clapet anti-retour laissant passer le fluide du port d'alimentation (A) vers le port d'entrée (E).

**12.** Circuit hydraulique selon la revendication 10 ou 11, dans lequel un deuxième clapet anti-retour (C2) est placé en parallèle du deuxième restricteur (R2), le deuxième clapet anti-retour laissant passer le fluide de la chambre de pilotage ($C_h$) vers le port d'entrée (E).

**13.** Aéronef comprenant un boîtier d'accrochage (13, 23) pour la retenue d'un atterrisseur (10) escamotable ou d'une trappe (20) refermant une soute destinée à recevoir l'atterrisseur, le boîtier d'accrochage comportant un actionneur de déverrouillage (12, 22) qui comprend un vérin (Ve) hydraulique relié à un circuit hydraulique selon l'une quelconque des revendications 10 à 12.

**Patentansprüche**

**1.** Verfahren zur Diagnose eines Verschlechterungszustands eines Einhängegehäuses (13, 23) zum Halten einer Olive (15, 25) eines beweglichen Elements (10, 20), wobei das Einhängegehäuse Folgendes umfasst:

  - ein Haken (14, 24), der zwischen einer Freigabeposition und einer Halteposition der Olive schwenkt;
  - ein Verriegelungsorgan (18, 28), das zwischen einer Verriegelungsposition, in der der Haken durch das Verriegelungsorgan in der Halteposition festgehalten wird, und einer Entriegelungsposition schwenkt, in der sich der Haken unter dem Zwingenschub des beweglichen Elements frei bewegen kann; und
  - ein Entriegelungsaktuator (12, 22) mit einem Hydraulikzylinder ($V_e$), der mit Strom versorgt wird, um auf das Verriegelungsorgan einzuwirken, um es in die Entriegelungsposition zu drücken;

das Verfahren, das bei einer Abfolge der Freigabe des Hakens, der durch das Verriegelungsorgan in der Halteposition festgehalten wird, die folgenden Schritte umfasst:

  a) Versorgung des Zylinders mit unter Druck stehendem Fluid mit einem Entwicklungsgesetz, nach dem der Fluiddruck für eine vorbestimmte Zeit ($T$) unter einem vollen Druck ($P_s$) und dann gleich unter dem vollen Druck liegt;
  b) einen Zeitpunkt ($t$) für die Freigabe des Hakens bestimmen und mit dem Zeitpunkt ($t_1$) vergleichen, an dem die vorgegebene Dauer endet;
  c) aus dem Vergleich in Schritt b) einen Verschlechterungszustand des Einhängegehäuses ableiten.

**2.** Verfahren nach Anspruch 1, wobei die vorbestimmte Dauer ($T$) geringfügig größer ist als eine maximale Dauer ($T_{max}$) der Freigabe des Hakens (14, 24) unter nominalen Fetten-/Schmierbedingungen des Einhängegehäuses (13, 23).

**3.** Verfahren nach einem der vorhergehenden Ansprüche, bei dem der Zeitpunkt ($t$) der Freigabe des Hakens (14, 24) von einem Näherungssensor (19, 29) bestimmt wird, der so angeordnet ist, dass er das Vorhandensein des Hakens in der Halteposition erfasst.

**4.** Verfahren nach einem der vorhergehenden Ansprüche, ferner umfassend den Schritt d) des Programmierens einer Wartung des Einhängegehäuses entsprechend dem Degradationszustand des Einhängegehäuses (13, 23).

**5.** Verfahren nach einem der vorhergehenden Ansprüche, bei dem der Fluiddruck während der vorbestimmten Zeit ($T$) im Wesentlichen konstant und gleich einem vorbestimmten Druck ($P_{lim}$) ist.

**6.** Verfahren nach einem der Ansprüche 1 bis 4, bei dem der Druck des Fluids während der vorbestimmten Zeit ($T$) schrittweise bis zum Erreichen eines vorbestimmten Drucks ($P_{lim}$) erhöht wird.

7. Verfahren nach Anspruch 6, bei dem der Druck des Fluids während der vorbestimmten Zeit ($T$) gleich einem Druck ist, der niedriger als der vorbestimmte Druck ($P_{lim}$) und dann gleich dem bestimmten Druck ($P_{lim}$) ist.

8. Verfahren nach einem der Ansprüche 1 bis 4, bei dem der Druck des Fluids während der vorbestimmten Zeit ($T$) schrittweise bis zum Erreichen eines vorbestimmten Drucks ($P_{lim}$) erhöht wird.

9. Verfahren nach einem der Ansprüche 5 bis 8, bei dem der vorbestimmte Druck ($P_{lim}$) größer ist als ein maximaler Druck ($P_{max}$) zum Lösen des Hakens (14, 24) unter nominalen Fetten-/Schmierbedingungen des Einhängegehäuses (13, 23).

10. Hydraulischer Versorgungskreislauf eines Zylinders ($V_e$) zur Durchführung des Verfahrens nach einem der Ansprüche 1 bis 9, wobei der Kreislauf ein Verzögerungsventil ($V_r$ $V_r$', $V_r$'') mit einem Einlassanschluss (E) für eine Verbindung mit einer Druckmittelquelle (P), einem Auslassanschluss (S) für eine Verbindung mit dem Zylinder und mindestens einem Rücklaufanschluss (R) umfasst und das Verzögerungsventil einen Verteiler (D) umfasst, der Folgendes umfasst:

- ein Versorgunganschluss (A), der über ein erstes Drosselventil (R1) mit dem Einlassanschluss verbunden ist;
- ein erster Bedienanschluss, der den Auslassanschluss bildet,
- mindestens einen zweiten Bedienanschluss, der den Rücklaufanschluss bildet;
- eine Schublade ($T_r$), die zwischen einer Druckbegrenzungsposition, in die sie automatisch von einer Feder ($R_e$) zurückgeholt wird und in der der Versorgungsanschluss über ein drittes Drosselventil (R3, R3.1, R3.2, R3.3) mit dem Auslassanschluss und dem Rücklaufanschluss verbunden ist, und einer Volldruckposition, in der die Schublade den Rücklaufanschluss blockiert, beweglich ist; und
- eine Steuerkammer ($C_h$), die über ein zweites Drosselventil (R2) mit dem Einlassanschluss verbunden ist, um die bewegliche Schublade zu bewegen.

11. Hydraulikkreislauf nach Anspruch 10, bei dem ein erstes Rückschlagventil (C1) parallel zum ersten Drosselventil (R1) angeordnet ist, wobei das erste Rückschlagventil das Fluid aus dem Versorgunganschluss (A) zum Einlassanschluss (E) durchlässt.

12. Hydraulikkreislauf nach Anspruch 10 oder 11, wobei parallel zum zweiten Drosselventil (R2) ein zweites Rückschlagventil (C2) angeordnet ist, wobei das zweite Rückschlagventil Fluid aus der Steuerkammer ($C_h$) zum Einlassanschluss (E) durchlässt.

13. Luftfahrzeug mit einem Einhängegehäuse (13, 23) zum Halten eines versenkbaren Fahrwerks (10) oder einer Klappe (20), die einen Laderaum für das Fahrwerk verschließt, wobei das Einhängegehäuse einen Entriegelungsaktuator (12, 22) umfasst, der einen Hydraulikzylinder ($V_e$) umfasst, der mit einem Hydraulikkreislauf nach einem der Ansprüche 10 bis 12 verbunden ist.

**Claims**

1. Method for diagnosing a state of deterioration of an uplock (13, 23) for the retention of a tapped nut (15, 25) of a movable element (10, 20), the uplock comprising:

- a hook (14, 24) pivoting between a release position and a position for retaining the tapped nut;
- a locking member (18, 28) pivoting between a locking position, in which the hook is immobilised in the retaining position by the locking member, and an unlocking position, in which the hook is free to be moved under the thrust of the tapped nut of the movable element; and
- an unlocking actuator (12, 22) comprising a hydraulic cylinder ($V_e$) supplied to act on the locking member in view of pushing it back to the unlocking position;

the method comprising, during a release sequence of the hook immobilised in the retaining position by the locking member, the following steps:

a) supplying the cylinder with pressurised fluid with an evolution law according to which the pressure of the fluid is, for a predetermined period ($T$), lower than a full pressure ($P_s$), then equal to the full pressure;
b) determining a release time ($t$) of the hook and comparing it with the time ($t_1$) when the predetermined time period ends;
c) deducing, from the comparison performed in step b), a state of deterioration of the uplock.

2. Method according to claim 1, wherein the predetermined period ($T$) is slightly greater than a maximum period ($T_{max}$) for releasing the hook (14, 24) under nominal conditions for greasing/lubricating the uplock (13, 23).

3. Method according to any one of the preceding claims, wherein the release time ($t$) of the hook (14, 24) is determined from a proximity sensor (19, 29) arranged to detect the presence of said hook in the retaining position.

4. Method according to any one of the preceding claims, further comprising the step d) consisting of scheduling, from the state of deterioration of the uplock (13, 23), a maintenance of said uplock.

5. Method according to any one of the preceding claims, wherein the pressure of the fluid is, for the predetermined period ($T$), substantially constant and equal to a predetermined pressure ($P_{lim}$).

6. Method according to any one of claims 1 to 4, wherein the pressure of the fluid is, for the predetermined period ($T$), increasing stepwise until reaching a predetermined pressure ($P_{lim}$).

7. Method according to claim 6, wherein the pressure of the fluid is, for the predetermined period ($T$), equal to a pressure lower than the predetermined pressure ($P_{lim}$), then equal to the determined pressure ($P_{lim}$).

8. Method according to any one of claims 1 to 4, wherein the pressure of the fluid is, for the predetermined period ($T$), increasing continuously until reaching a predetermined pressure ($P_{lim}$).

9. Method according to any one of claims 5 to 8, wherein the predetermined pressure ($P_{lim}$) is greater than a maximum pressure ($P_{max}$) for releasing the hook (14, 24) under nominal conditions for greasing/lubricating the uplock (13, 23).

10. Hydraulic circuit for supplying a cylinder ($V_e$) enabling the implementation of the method according to any one of claims 1 to 9, the circuit comprising a delay valve ($V_r$, $V_r'$, $V_r''$) having an inlet port (E) intended to be connected to a pressurised fluid source (P), an outlet port (S) intended to be connected to the cylinder and at least one return port (R), and the delay valve comprising a distributor (D) comprising:

   - a supply port (A) connected to the inlet port via a first restrictor (R1);
   - a first service port forming the outlet port,
   - at least one second service port forming the return port;
   - a slide valve ($T_r$) which is movable between a pressure limiting position, towards which it is returned automatically by a spring ($R_e$), and in which the supply port is connected to the outlet port and to the return port via a third restrictor (R3, R3.1, R3.2, R3.3), and a full pressure position, in which the slide valve blocks the return port; and
   - a control chamber ($C_h$) connected to the inlet port via a second restrictor (R2) to move the movable slide valve.

11. Hydraulic circuit according to claim 10, wherein a first check valve (C1) is placed in parallel with the first restrictor (R1), the first check valve letting the fluid pass from the support port (A) to the inlet port (E).

12. Hydraulic circuit according to claim 10 or 11, wherein a second check valve (C2) is placed in parallel with the second restrictor (R2), the second check valve letting the fluid pass from the control chamber ($C_h$) to the inlet port (E) .

13. Aircraft comprising an uplock (13, 23) for the retention of a retractable landing gear (10) or of a door (20) containing a hold intended to receive the landing gear, the uplock comprising an unlocking actuator (12, 22) which comprises a hydraulic cylinder (Ve) connected to a hydraulic circuit according to any one of claims 10 to 12.

Fig. 1A

Fig. 1B

Temps (s)

Bars

Pression actionneur de déverrouillage

1,07 s

60 bars

1,16 s

160 bars

**Fig. 2**

# Fig. 3

Fig. 4A

Fig. 4B

Fig. 4C

**Fig. 5**

**Fig. 6A**

**Fig. 6B**

**Fig. 6C**

Alimenter la chambre du vérin ($V_e$) en fluide sous pression, la pression du fluide étant, pendant une durée prédéterminée (T), égale à une pression prédéterminée ($P_{lim}$) inférieure à une pleine pression ($P_S$), puis égale à la pleine pression

Déterminer l'instant (t) de libération du crochet et le comparer à l'instant (t1) où prend fin la durée prédéterminée

En déduire un état de dégradation du boîtier d'accrochage

# Fig. 7

**Fig. 8**

Légende:
- ····· Pression du port d'entrée E
- —— Pression du port de sortie S/dans le vérin

Plage de temps de déverrouillage dans des conditions nominales de graissage/lubrification

Plage de pression de déverrouillage dans des conditions nominales de graissage/lubrification

[bar]

$P_s$

$P_{lim}$

$P_{dev}$

$P_{max}$

$T_{max}$

$T$

$t$

$t_{max}$

$t0$

$t1$

Temps[s]

EP 4 476 136 B1

**Fig. 9**

Pression d'alimentation du vérin

Plage de temps de déverrouillage dans des conditions nominales de graissage/lubrification

Plage de pression de déverrouillage dans des conditions nominales de graissage/lubrification

$[bar]$

$P_s$

$P_{lim}$

$P_{max}$

$T_{max}$

$T$

$t_0$ $t_{max}$ $t_1$

$Temps[s]$

**Fig. 10**

**Fig. 12**

Fig. 11

Pression d'alimentation du vérin

[bar]

$P_s$

$P_{lim}$

$P_{max}$

Plage de temps de déverrouillage dans des conditions nominales de graissage/lubrification

$T_{max}$

Plage de pression de déverrouillage dans des conditions nominales de graissage/lubrification

$t_{max}$

$T$

$t0$

$t1$

Temps[s]

EP 4 476 136 B1

## RÉFÉRENCES CITÉES DANS LA DESCRIPTION

**Documents brevets cités dans la description**

- US 2020377224 A1

- DE 10251821 B3